# EUROPÄISCHE PATENTSCHRIFT

(11) **EP 3 007 891 B1**
(45) Veröffentlichungstag und Bekanntmachung des Hinweises auf die Patenterteilung: **26.12.2018**
(21) Anmeldenummer: 14714700.3
(22) Anmeldetag: 02.04.2014
(51) Int. Cl.: B29D 30/32

(54) **VERFAHREN ZUR HERSTELLUNG EINES FAHRZEUGREIFENS**
METHOD FOR PRODUCING A VEHICLE TYRE
PROCÉDÉ PERMETTANT DE PRODUIRE UN PNEUMATIQUE DE VÉHICULE

(30) Priorität: 11.06.2013 DE 102013106027
(43) Veröffentlichungstag der Anmeldung: 20.04.2016
(73) Patentinhaber: Continental Reifen Deutschland GmbH, 30165 Hannover (DE)
(72) Erfinder: THOMFOHRDE, Claudia, 38542 Leiferde (DE); KNEUSSEL, Ewald, 30890 Barsinghausen (DE); KÖNIG, Olav, 30851 Langenhagen (DE); GERIGHAUSEN, Martin, 30890 Barsinghausen (DE); LINNE, Stefan, 30900 Wedemark (DE); SCHULZE, Norbert, 26427 Holtgast (DE); RADZIEJ, Guido, 38228 Salzgitter (DE)
(74) Vertreter: Widjaja, Wira
(86) Internationale Anmeldenummer: PCT/EP2014/056561
(87) Internationale Veröffentlichungsnummer: WO 2014/198435

(56) Entgegenhaltungen:
- EP-A1- 0 555 813
- EP-A1- 2 380 728
- EP-A2- 0 459 728
- WO-A1-2012/147012
- WO-A1-2012/156135
- WO-A1-2012/156146
- WO-A1-2012/156147
- DE-A1-102006 012 026
- DE-A1-102011 050 140
- JP-A- 2002 081 404
- US-A- 2 605 195

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst entweder die Seitenwände, die Innenschicht und die Einlagen oder nur die Innenschicht und die Einalgen als breite Materiallagen auf einer Reifenaufbautrommel angeordnet werden. Anschließend wird der Wulstkern auf die Einlage gesetzt und das Einlagenende um den Kern herumgeschlagen.
Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut und auf einer Bombiertrommel bombiert. Die Karkasstrommel und die Bombiertrommel sind in der Regel relativ komplex aufgebaut.

Derartige zweistufige Verfahren sind beispielsweise aus der WO 2012/156135 A1 und der WO 2012/156146 A1 bekannt. Bei diesen Verfahren wird auf einer Karkasstrommel eine Reifenkarkasse aufgebaut, diese zu einer Bombiertrommel verfahren und bombiert. Anschließend werden die Seitenwände mit an der Bombiertrommel angeordneten Rollenhebeln an der Reifenkarkasse hochgeschlagen.

Die DE 10 2006 012 026 A1 offenbart eine Reifenaufbautrommel mit Kernsetzvorrichtungen, außerhalb der Aufbautrommel auf Spindeln gelagert sind, die über Servomotoren axial verfahrbar sind. Nach dem Setzen der Wulstkerne werden die Kernsetzvorrichtungen über Kupplungen und nach innen in diese Kupplungen verfahren, an welchen eine Vielzahl von Rollenarmen gelagert ist. Auf diese Weise wird eine servogesteuerte Verbindung zwischen den Rollenarmen und den Kernsetzvorrichtungen hergestellt. Die Kernsetzvorrichtungen werden nun axial verfahren, wodurch die Rollenarme nach außen gelenkt werden und ihre Rollen das überstehende Karkasslagenmaterial während des Bombiervorganges der Karkasse an die sich bildende Karkasse verrollen. Aus der DE 10 2011 050 140 A1 ist ein Verfahren zum Hochschlagen von Reifenbauteilen auf einer Bombiertrommel bekannt, bei welchem seitlich der Trommel überstehende Reifenbauteile, zu welchen Teilen die Reifenkarkasse und Seitenwandteile gehören, an die expandierte Karkasse gleichzeitig mittels einer Vielzahl von Rollenhebeln angerollt werden. Die Rollenhebel sind über einen außerhalb der Bombiertrommel liegenden externen Antrieb gekoppelt, welcher eine in axialer Richtung verfahrbare und eine in radialer Richtung verfahrbare Vorschubeinrichtung aufweist.

Bei weiteren herkömmlichen Reifenaufbauverfahren erfolgt die Vereinigung der Reifenkarkasse mit einem Gürtel-Laufstreifen-Paket auf einer separaten Bombiertrommel. Der Umschlagmechanismus für die Bombiertrommeln ist im allgemeinen so ausgeführt, dass die Karkasseinlagenenden und die Seitenwände gemeinsam hochgearbeitet werden. Dabei erfolgt der Antrieb für den Umschlagmechanismus aus der Trommelwelle heraus. Dadurch ist die Bombiertrommel relativ komplex aufgebaut.

Der Erfindung liegt die Aufgabe zugrunde, ein verbessertes Verfahren zur Herstellung von Fahrzeugreifen bereitzustellen.
Durch das Vefahren sollen die Komplexität der Bewegungen an der Bombiertrommel reduziert werden, wobei gleichzeitig die Fertigungsqualität des Fahrzeugreifens erhalten bleiben soll.

Gelöst wird die Aufgabe gemäß Anspruch 1 dadurch, dass ein Verfahren mit folgenden Schritten eingesetzt wird:
a) Fertigstellen einer Reifenkarkasse mit einem Lagenumschlag auf einer Karkasstrommel,
   wobei einzelne Karkasseinlagen auf der Karkasstrommel aufgewickelt werden und mit einer Umschlag-Vorrichtung die axialen Enden der Karkasseinlagen um zwei Reifenkerne herum geschlagen werden und
   wobei auf der Karkasstrommel keine Reifenaufbauteile in Form von Seitenwänden aufgelegt werden,
b) Abnahme der Reifenkarkasse mit einem Lagenumschlag von der Karkasstrommel mit einer Karkasstransfereinheit,
c) Verfahren der Karkasstransfereinheit mit der Reifenkarkasse zu einer Seitenwand-Station zum Anordnen von Seitenwänden an den Reifenwülsten der Reifenkarkasse oder
   Verfahren der Karkasstransfereinheit mit der Reifenkarkasse zu einer BombierStation mit einer Bombiertrommel auf der vorab zwei Seitenwände im Bereich der Kernklemmsegmente positioniert worden sind,
d) Übergabe der Reifenkarkasse von der Karkasstransfereinheit an die Bombiertrommel,
e) Wegfahren der Karkasstransfereinheit von der Bombiertrommel,
f) Bombieren der Reifenkarkasse mit den im Bereich der Reifenwülste angebundenen Seitenwänden,
   wobei die Seitenwände mit einem Hochschlagmittel seitlich an der Reifenkarkasse hochgeschlagen werden und die Reifenkarasse mit dem koaxial angeordneten Gürtel-Laufstreifen-Paket vereinigt wird, wobei das Hochschlagmittel an einem Kupplungselement drehbar angeordnet ist, welches an der Trommelwelle angeordnet ist und in axialer Richtung und koaxial zur Trommelwelle gelagert ist und mit einem externen Antrieb in axialer Richtung bewegt wird, welcher Antrieb außerhalb der Trommelwelle der Bombiertrommel angeordnet ist,
g) Fertigstellen des Reifenrohlings mit weiteren Schritten.

Ein Vorteil der Erfindung ist insbesondere darin zu sehen, dass durch das Verfahren auf einfache Weise ein Fahrzeugreifen hergestellt werden kann.

Das Verfahren ermöglicht ebenfalls die Herstellung von speziellen Reifenkonstruktionen, die mit den herkömmlichen Reifenaufbauverfahren bisher nicht möglich waren. Zu diesen Reifenkonstruktionen zählen insbesondere Fahrzeugreifen, bei denen das obere Ende der Seitenwände über den seitlichen Bereichen des Laufstreifens enden. Diese Art der Reifenkonstruktion wird durch die erfindungsgemäße Reihenfolge der Verfahrensschritte nach Patentanspruch 1 ermöglicht.

Ein weiterer wesentlicher Vorteil wird durch den externen Antrieb erreicht, der im Gegensatz zu herkömmlichen Bauverfahren nicht aus der Trommelwelle heraus erfolgt, wobei mit der neuen Idee der externe Trommelantrieb nicht zu qualitätiven Nachteilen für den Reifen führt. Die Trommelwelle kann dadurch kompakter ausgeführt werden und umfasst eine reduzierte Anzahl von Bauteilen. Außerdem wird beim erfindungsgemäßen Verfahren die Fertigungsqualität der Fahrzeugreifen nicht beeinträchtigt, da mit dem Hochschlagmittel und dem externen Antrieb ausschließlich die Seitenwände beim Bombiervorgang an der Reifenkarkaasse hochgeschlagen werden. Das Umschlagen der Karkasseinlagenenden um die Reifenkerne erfolgt bereits auf der Karkasstrommel und nicht erst auf der Bombiertrommel. Dadurch, dass der externe Antrieb mit einem an der Trommelwelle angeordneten Kupplungselement das Hochschlagmittel bewegt, kann das Hochschlagmittel mit einer hohen Genauigkeit die anliegenden Seitenwände hochschlagen. Dabei ist vorgesehen, dass das Kupplungselementes in axialer Richtung und koaxial zur Trommelwelle gelagert ist.

Dadurch wird eine einfache Lagerung des Kupplungselementes erzielt.

In einer weiteren vorteilhaften Weiterbildung der Erfindung ist vorgesehen, dass das Hochschlagmittel in Form einer Vielzahl von Rollenhebeln mit drehbaren Umschalgrollen ausgebildet ist.
Dadurch lassen sich die axialen Enden der Seitenwände mit einer hohen Genauigkeit und Gleichmäßigkeit an der Reifenkarkasse hochschlagen.

In einer weiteren vorteilhaften Weiterbildung der Erfindung ist vorgesehen, dass bei Schritt f) der externe Antrieb in Form eines pneumatischen oder eines motorischen Antriebes ausgebildet ist.
Dadurch lässt sich eine optimale Kraftübertragung auf das Kupplungselement erzielen.

In einer weiteren vorteilhaften Weiterbildung der Erfindung ist vorgesehen, dass bei Schritt f) auf beiden Seiten der Bombiertrommel ein eigenständiger externer Antrieb angeordnet ist, wodurch die Hochschlagbewegung mit den Hochschlagmitteln auf beiden Seiten der Bombiertrommel unabhängig voneinander erfolgen kann.
Auf diese Weise können beide externe Antriebe unabhängig voneinander gesteuert werden.

In einer weiteren vorteilhaften Weiterbildung der Erfindung ist vorgesehen, dass bei Schritt f) die Hochschlagbewegung mit den Hochschlagmitteln auf beiden Seiten der Bombiertrommel miteinander gekoppelt ist.
Dadurch wird nur auf einer Seite der Bombiertrommel ein externer Antrieb benötigt.

In einer weiteren vorteilhaften Weiterbildung der Erfindung ist vorgesehen, dass bei Schritt c) in der Seitenwandstation die Seitenwände vorab auf separaten Seitenwandtrommeln aufgewickelt werden,
wobei nachfolgend die Reifenkarkasse koaxial zu den Seitenwandtrommeln positioniert und anschließend die Seitenwände über eines Expansion der Seitenwandtrommeln an den Reifenwülsten der Reifenkarkasse angebunden werden,

wobei nachfolgend die Karkasstransfereinheit die Reifenkarkasse mit den angebundenen Seitenwänden zur Bombierstation verfährt.
Bei dieser Herstellungsvariante werden die Seitenwände auf separaten Seitenwandtrommeln appliziert. Dadurch wird die Komplexität an der Karkass-Station bzw. an der Karkasstrommel reduziert.

In einer weiteren vorteilhaften Weiterbildung der Erfindung ist vorgesehen, dass bei Schritt c) die Reifenkarkasse mit Lagenumschlag direkt zur Bombierstation verfahren wird und dort koaxial im Bereich der Kernklemmsegmente der Bombiertrommel positioniert wird, wobei die Seitenwände vorab im Bereich der Kernklemmsegmente der Bombiertrommel aufgewickelt und vorpositioniert worden sind.
Bei dieser Herstellungsvariante erfolgt die Applizierung der Seitenwände erst auf der Bombiertrommel. Dadurch wird bei dieser Herstellungsvariante keine separate Seitenwandstation benötigt.

In einer weiteren vorteilhaften Weiterbildung der Erfindung ist vorgesehen, dass die Kernklemmsegmente in Form von flachen Segmenten, Segmenten mit einer Mulde oder Segmenten mit einer Nut ausgebildet sind.
Dadurch kann die Reifenkarkasse mit den Lagenumschlägen mit einer hohen Präzision an die Bombiertrommel übergeben werden.

In einer weiteren vorteilhaften Weiterbildung der Erfindung ist vorgesehen, dass die Seitenwände eine Kombibauteil mit zusätzlichen Reifenbauteilen ist.
Auf diese Weise kann die Zykluszeit zur Herstellung der Reifenrohlinge reduziert werden.

In einer weiteren vorteilhaften Weiterbildung der Erfindung ist vorgesehen, dass bei Schritt f) die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.
Dadurch lassen sich bestimmte Reifenkonstruktionen umsetzen, die vorteilhafte Reifeneigenschaften besitzen.

Anhand eines Ausführungsbeispieles soll die Erfindung näher erläutert werden. Es zeigen:

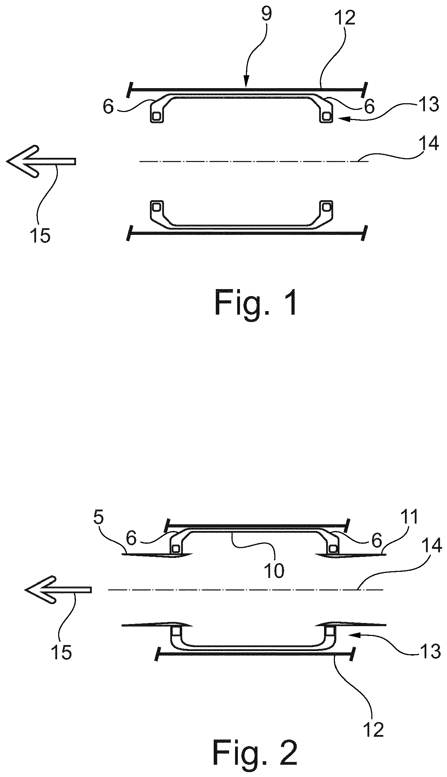

- Figuren 1 - 3:: ein Ausführungsbeispiel des Verfahrens

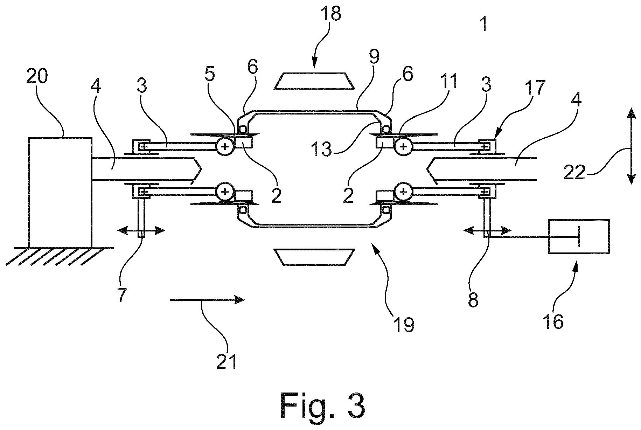

Die Figur 1 zeigt eine Herstellungsvariante, bei der auf der Karkasstrommel die Reifenkarkasse 9 mit Lagenumschlägen 6 hergestellt worden sind. An der Reifenkarkasse 9 sind noch keine Seitenwände angeordnet. Die Karkasstransfereinheit 12 nimmt die Reifenkarkasse 9 von der nicht dargestellten Karkasstrommel ab und verfährt sie zur Bombierstation an der bereits Seitenwände auf die Bombiertrommel aufgewickelt worden sind. An der Bombierstation erfolgt die Übergabe der Reifenkarkasse 9 an die Bombiertrommel, wie sie in der Figur 3 dargestellt ist. Die axiale Achse 14 der Reifenkarkasse 9 ist mit der gestrichtelten Linie 14 dargestellt.

Die Figur 2 zeigt die zweite Herstellungsvariante, bei der die Reifenkarkasse 10 mit einem Lagenumschlag und mit verbundenen Seitenwänden 5 und 11 zur Bombierstation verfahren wird. Bei dieser Herstellungsvariante erfolgt der Aufbau der Reifenkarkasse mit Lagenumschlag und ohne Seitenwände wiederum auf einer nicht dargestellten Karkasstrommel. Nachdem der Lagenumschlag 6 an der Reifenkarkasse 10 auf der Karkasstrommel erfolgt ist, nimmt die Karkasstransfereinheit 12 die Reifenkarkasse von der Karkasstrommel ab und verfährt sie zu einer Seitenwandstation. An der Seitenwandstation erfolgt das Verbinden von Seitenwänden mit Seitenwandtrommeln an die Reifenwülste 13 der Reifenkarkasse 10. Die Seitenwände werden zunächst auf einzelnen Seitenwandtrommeln aufgewickelt. Die Reifenkarkasse wird anschließend über den Seitenwandtrommeln koaxial positioniert, wobei durch einen Expansionsvorgang die Seitenwände an die Reifenwülste der Reifenkarkasse angedrückt werden. Die Karkasstransfereinheit 12 übernimmt die Reifenkarkasse 10 mit den angebundenen Seitenwandtrommeln 5 und 11 aus der Seitenwandstation und verfährt sie in Richtung 15 zur Bombierstation, wie sie in der Figur 3 dargestellt ist.

Die Figur 3 zeigt die Bombierstation 1 mit der Bombiertrommel 19. Die Bombierstation umfasst den Maschinenkasten 20 mit der Trommelwelle 4, den Kernklemmsegmenten 2 und der Bombiertrommel 19. Es ist der Verfahrensschritt dargestellt, bei dem die Reifenkarkasse 9 koaxial zur Bombiertrommel 19 positioniert wurde. Die Kernklemmsegmente 2 halten die Reifenkarkasse 9 im Bereich der beiden Reifenwülste 13. Bei der ersten Herstellungsvariante wurden die beiden Seitenwände 5 und 11 vorab im Bereich der Kernklemmsegmente 2 der Bombiertrommel 9 positioniert. Anschließend erfolgte die Übergabe der Reifenkarkasse 9 an die Bombiertrommel 19. Bei der zweiten Herstellungsvariante wurde die Reifenkarkasse mit den beiden bereits angebundenen Seitenwänden 5 und 11 an die Bombiertrommel 19 übergeben. Unterhalb der beiden seitlichen Enden der Seitenwände 5 und 11 sind eine Vielzahl von Hochschlagmitteln 3 in Form von Rollenhebeln angeordnet. Die Hochschlagmittel bzw. Rollenhebel 3 sind über einen Drehpunkt 17 an den beiden Kupplungselementen 7 und 8 angeordnet. Beide Kupplungselemente 7 und 9 sind koaxial und in axialer Richtung zur Trommelwelle 4 gelagert. Wenn das linke Kupplungselement 7 in axialer Richtung 21 zur Trommelmitte bewegt wird, werden die Hochschlagmittel bzw. Rollenhebel in radialer Richtung 22 auseinander bewegt und dabei die beiden Seitenwände 5 und 11 an der Reifenkarkasse 10 hochgeschlagen. Gleichzeitig erfolgt der Bombiervorgang, bei dem die Reifenkarkasse 9 mit dem koaxial angeordneten Gürtel-Laufstreifen-Paket 18 verbunden wird. Die Enden der Seitenwände 5 und 11 können bei diesem Verfahren über die seitlichen Bereiche des Gürtel-Laufstreifen-Paketes 18 angeordnet werden. Die Bewegung der beiden Kupplungselemente 7 und 8 in axialer Richtugn 21 erfolgt über einen externen Antrieb 16, der außerhalb der Trommelwelle 4 angeordnet ist. In der dargestellten Figur ist der externe Antrieb 16 in Form eines pneumatischen Zylinders ausgebildet, der die Kupplungslemente 7 und 8 in axialer Richtung 21 bewegt. Durch den externen Antrieb 16 wird die Komplexität der Trommelwelle 4 reduziert. Außerdem kann der Bombiervorgang robuster ausgeführt werden. Mit den Hochschlagmitteln 3 werden ausschließlich die Seitenwände an der Reifenkarkasse 9 hochgeschlagen. Dadurch wird die Fertigungsqualität der herzustellenden Reifen nicht beeinträchtigt.

### Bezugszeichenliste

### (ist Teil der Beschreibung)

- 1: Bombierstation
- 2: Kernklemmsegmente
- 3: Hochschlagmittel in Form von Rollenhebeln
- 4: Trommelwelle der Bombiertrommel
- 5: linke Seitenwand
- 6: Lagenumschlag der Reifenkarkasse
- 7: Kupplungselement für externen Antrieb auf linker Seite
- 8: Kupplungselement für externen Antrieb auf rechter Seite
- 9: Reifenkarkasse mit Lagenumschlägen und ohne Seitenwände
- 10: Reifenkarkasse mit Lagenumschlag und angebundenen Seitenwänden
- 11: rechte Seitenwand
- 12: Karkasstransfereinheit
- 13: Reifenwulst
- 14: axiale Achse der Reifenkarkasse
- 15: Verfahrbewegung zur Bombiertrommel
- 16: externer Antrieb in Form eines pneumtisch wirkenden Antriebes
- 17: Drehpunkt am Rollenhebel
- 18: Gürtel-Laufstreifen-Paket
- 19: B ombiertrommel
- 20: Maschinenkasten
- 21: axiale Richtung
- 22: radiale Richtung

## Patentansprüche

1. Verfahren zur Herstellung eines Fahrzeugreifens mit einer Reifenkarkasse (9, 10), Reifenwülsten (13) mit Kernen, einem Reifengürtel und einem Laufstreifen mit folgenden Schritten:
a) Fertigstellen einer Reifenkarkasse (9, 10) mit einem Lagenumschlag (6) auf einer Karkasstrommel,
wobei einzelne Karkasseinlagen auf der Karkasstrommel aufgewickelt werden und mit einer Umschlag-Vorrichtung die axialen Enden der Karkasseinlagen um zwei Reifenkerne herum geschlagen werden und
wobei auf der Karkasstrommel keine Reifenaufbauteile in Form von Seitenwänden (5, 11) aufgelegt werden,
b) Abnahme der Reifenkarkasse (9) mit einem Lagenumschlag (6) von der Karkasstrommel mit einer Karkasstranfereinheit (12),
c) Verfahren der Karkasstranfereinheit (12) mit der Reifenkarkasse (10) zu einer Seitenwand-Station zum Anordnen von Seitenwänden (5, 11) an den Reifenwülsten (13) der Reifenkarkasse (10) oder
Verfahren der Karkasstranfereinheit (12) mit der Reifenkarkasse (9) zu einer BombierStation (1) mit einer Bombiertrommel (19) auf der vorab zwei Seitenwände (5, 11) im Bereich der Kernklemmsegmente (2) positioniert worden sind,
d) Übergabe der Reifenkarkasse (9, 10) von der Karkasstransfereinheit (12) an die Bombiertrommel (19),
e) Wegfahren der Karkasstransfereinheit (12) von der Bombiertrommel (19),
f) Bombieren der Reifenkarkasse (9, 10) mit den im Bereich der Reifenwülste (13) angebundenen Seitenwänden (5, 11),
wobei die Seitenwände (5, 11) mit einem Hochschlagmittel (3) seitlich an der Reifenkarkasse (9, 10) hochgeschlagen werden und die Reifenkarasse (9, 10) mit dem koaxial angeordneten Gürtel-Laufstreifen-Paket (18) vereinigt wird, wobei das Hochschlagmittel (3) an einem Kupplungselement (7, 8) drehbar angeordnet ist, welches an der Trommelwelle angeordnet ist und in axialer Richtung und koaxial zur Trommelwelle gelagert ist und mit einem externen Antrieb (16) in axialer Richtung bewegt wird, welcher Antrieb (16) außerhalb der Trommelwelle (4) der Bombiertrommel (19) angeordnet ist,
g) Fertigstellen des Reifenrohlings mit weiteren Schritten.

2. Verfahren nach Anspruch 1,
**dadurch gekennzeichnet, dass**
bei Schritt f) die Seitenwand (5, 11) nach dem Transfer des Gürtel-Laufstreifen-Paketes (18) über die Bombiertrommel (19) hochgeschlagen wird, wobei ein Teil der Seitenwand (5, 11) über dem Laufstreifen angeordnet werden kann.

3. Verfahren nach einem der vorhergehenden Ansprüche,
**dadurch gekennzeichnet, dass**
das Hochschlagmittel in Form (3) einer Vielzahl von Rollenhebeln mit drehbaren Umschlagrollen ausgebildet ist.

4. Verfahren nach einem der vorhergehenden Ansprüche,
**dadurch gekennzeichnet, dass**
bei Schritt f) der externe Antrieb (16) in Form eines pneumatischen oder eines motorischen Antriebes ausgebildet ist.

5. Verfahren nach einem der vorhergehenden Ansprüche,
**dadurch gekennzeichnet, dass** bei Schritt f) auf beiden Seiten der Bombiertrommel (19) ein eigenständiger externer Antrieb (16) angeordnet ist, wodurch die Hochschlagbewegung mit den Hochschlagmitteln (3) auf beiden Seiten der Bombiertrommel (19) unabhängig voneinander erfolgen kann.

6. Verfahren nach einem der vorhergehenden Ansprüche,
**dadurch gekennzeichnet, dass**
bei Schritt f) die Hochschlagbewegung mit den Hochschlagmitteln (3) auf beiden Seiten der Bombiertrommel (19) miteinander gekoppelt ist.

7. Verfahren nach einem der vorhergehenden Ansprüche,
**dadurch gekennzeichnet, dass**
bei Schritt c) in der Seitenwandstation die Seitenwände (5, 11) vorab auf separaten Seitenwandtrommeln aufgewickelt werden,
wobei nachfolgend die Reifenkarkasse (10) koaxial zu den Seitenwandtrommeln positioniert und anschließend die Seitenwände (5, 11) über eines Expansion der Seitenwandtrommeln an den Reifenwülsten (15) der Reifenkarkasse (10) angebunden werden,
wobei nachfolgend die Karkasstransfereinheit (12) die Reifenkarkasse (10) mit den angebundenen Seitenwänden (5, 11) zur Bombierstation (1) verfährt.

8. Verfahren nach einem der vorhergehenden Ansprüche,
**dadurch gekennzeichnet, dass**
bei Schritt c) die Reifenkarkasse (9) mit Lagenumschlag (6) direkt zur Bombierstation (1) verfahren wird und dort koaxial im Bereich der Kernklemmsegmente (2) der Bombiertrommel (19) positioniert wird,
wobei die Seitenwände vorab im Bereich der Kernklemmsegmente der Bombiertrommel aufgewickelt und vorpositioniert worden sind.

9. Verfahren nach einem der vorhergehenden Ansprüche,
**dadurch gekennzeichnet, dass** die Kernklemmsegmente (2) in Form von flachen Segmenten, Segmenten mit einer Mulde oder Segmenten mit einer Nut ausgebildet sind.

10. Verfahren nach einem der vorhergehenden Ansprüche,
**dadurch gekennzeichnet, dass**
die Seitenwände (5, 11) eine Kombibauteil mit zusätzlichen Reifenbauteilen ist.

## Claims

1. Method for producing a vehicle tyre with a tyre carcass (9, 10), tyre beads (13) with cores, a tyre breaker belt and a tread, comprising the following steps:
a) completing a tyre carcass (9, 10) with a ply turnup (6) on a carcass drum,
wherein individual carcass inserts are wound up on the carcass drum and the axial ends of the carcass inserts are wrapped around two tyre cores by a wrapping device and
wherein no tyre building parts in the form of sidewalls (5, 11) are placed on the carcass drum,
b) removing the tyre carcass (9) with a ply turnup (6) from the carcass drum by a carcass transfer unit (12),
c) moving the carcass transfer unit (12) with the tyre carcass (10) to a sidewall station for arranging sidewalls (5, 11) on the tyre beads (13) of the tyre carcass (10) or
moving the carcass transfer unit (12) with the tyre carcass (9) to a shaping station (1) with a shaping drum (19), on which two sidewalls (5, 11) have been positioned in advance in the region of the core clamping segments (2),
d) transferring the tyre carcass (9, 10) from the carcass transfer unit (12) to the shaping drum (19),
e) moving the carcass transfer unit (12) away from the shaping drum (19),
f) shaping the tyre carcass (9, 10) with the sidewalls (5, 11) attached in the region of the tyre beads (13),
wherein the sidewalls (5, 11) are turned up laterally on the tyre carcass (9, 10) by a turning-up means (3) and the tyre carcass (9, 10) is combined with the coaxially arranged belt-tread package (18), wherein the turning-up means (3) is arranged rotatably on a coupling element (7, 8), which is arranged on the drum shaft and is mounted in the axial direction and coaxially in relation to the drum shaft and is moved by an external drive (16) in the axial direction, which drive (16) is arranged outside the drum shaft (4) of the shaping drum (19),
g) completing the tyre blank by further steps.

2. Method according to Claim 1,
**characterized in that**
in step f), the sidewall (5, 11) is turned up by means of the shaping drum (19) after the transfer of the belt-tread package (18), wherein part of the sidewall (5, 11) can be arranged over the tread.

3. Method according to one of the preceding claims,
**characterized in that**
the turning-up means is designed in the form (3) of a multiplicity of roller levers with rotatable turnup rollers.

4. Method according to one of the preceding claims,
**characterized in that**
in step f), the external drive (16) is designed in the form of a pneumatic or motorized drive.

5. Method according to one of the preceding claims,
**characterized in that**, in step f), an independent external drive (16) is arranged on both sides of the shaping drum (19), whereby the turning-up movement with the turning-up means (3) on both sides of the shaping drum (19) can be performed independently of one another.

6. Method according to one of the preceding claims,
**characterized in that**
in step f), the turning-up movement with the turning-up means (3) on both sides of the shaping drum (19) is coupled with one another.

7. Method according to one of the preceding claims,
**characterized in that**
in step c), the sidewalls (5, 11) are wound up on separate sidewall drums in advance in the sidewall station,
wherein after that the tyre carcass (10) is positioned coaxially in relation to the sidewall drums and subsequently the sidewalls (5, 11) are attached to the tyre beads (15) of the tyre carcass (10) by means of an expansion of the sidewall drums, wherein after that the carcass transfer unit (12) moves the tyre carcass (10) with the attached sidewalls (5, 11) to the shaping station (1).

8. Method according to one of the preceding claims,
**characterized in that**
in step c), the tyre carcass (9) with a ply turnup (6) is moved directly to the shaping station (1) and is positioned there coaxially in the region of the core clamping segments (2) of the shaping drum (19), wherein the sidewalls have been wound up and pre-positioned in advance in the region of the core clamping segments of the shaping drum.

9. Method according to one of the preceding claims,
**characterized in that** the core clamping segments (2) are designed in the form of flat segments, segments with a recess or segments with a groove.

10. Method according to one of the preceding claims,
**characterized in that**
the sidewalls (5, 11) are a combined component with additional tyre components.

## Revendications

1. Procédé de fabrication d'un pneumatique de véhicule comprenant une carcasse de pneumatique (9, 10), des bourrelets de pneumatique (13) pourvus de noyaux, une nappe d'armature de pneumatique et une bande de roulement, le procédé comprenant les étapes suivantes :
a) finir une carcasse de pneumatique (9, 10) par retournement de plis (6) sur un tambour de carcasse,
des armatures de carcasse individuelles étant enroulées sur le tambour de carcasse et les extrémités axiales des armatures de carcasse étant enroulées autour de deux noyaux de pneumatique au moyen d'un dispositif de retournement et
aucun élément de structure de pneumatique en forme de flancs (5, 11) n'étant placé sur le tambour de carcasse,
b) retirer la carcasse de pneumatique (9) par retournement de plis (6) du tambour de carcasse au moyen d'une unité de transfert de carcasse (12),
c) déplacer l'unité de transfert de carcasse (12) avec la carcasse de pneumatique (10) vers un poste de flancs pour disposer des flancs (5, 11) au niveau des bourrelets de pneumatique (13) de la carcasse de pneumatique (10) ou
déplacer l'unité de transfert de carcasse (12) avec la carcasse de pneumatique (9) vers un poste de galbage (1) comprenant un tambour de galbage (19) sur lequel deux flancs (5, 11) ont été préalablement positionnés dans la région des segments de serrage de noyau (2),
d) transférer la carcasse de pneumatique (9, 10) de l'unité de transfert de carcasse (12) vers le tambour de galbage (19),
e) écarter l'unité de transfert de carcasse (12) du tambour de galbage (19),
f) galber la carcasse de pneumatique (9, 10) avec les flancs (5, 11) raccordés dans la région des bourrelets de pneumatique (13),
les flancs (5, 11) étant relevés latéralement à la carcasse de pneumatique (9, 10) par un moyen de relevage (3) et la carcasse de pneumatique (9, 10) étant unie à l'ensemble nappe d'armature/bande de roulement (18) disposé coaxialement, le moyen de relevage (3) étant disposé de manière rotative au niveau d'un élément d'accouplement (7, 8) qui est disposé au niveau de l'arbre du tambour et qui est monté dans la direction axiale et coaxialement à l'arbre du tambour et qui est déplacé au moyen d'un entraînement extérieur (16) dans la direction axiale,
lequel entraînement (16) est disposé à l'extérieur de l'arbre (4) du tambour de galbage (19),
g) terminer le pneumatique avec des étapes supplémentaires.

2. Procédé selon la revendication 1,
**caractérisé en ce que**
à l'étape f), le flanc (5, 11) est relevé au-dessus du tambour de galbage (19) après le transfert de l'ensemble nappe d'armature/bande de roulement (18), une partie du flanc (5, 11) pouvant être placée au-dessus de la bande de roulement.

3. Procédé selon l'une des revendications précédentes, **caractérisé en ce que**
le moyen à relevage est conçu sous la forme (3) d'une pluralité de leviers à rouleaux comprenant des rouleaux de relevage rotatifs.

4. Procédé selon l'une des revendications précédentes, **caractérisé en ce que**
à l'étape f), l'entraînement extérieur (16) est conçu sous la forme d'un entraînement pneumatique ou d'un entraînement à moteur.

5. Procédé selon l'une des revendications précédentes,
**caractérisé en ce que**, à l'étape f), un entraînement extérieur indépendant (16) est disposé sur deux côtés du tambour de galbage (19) de sorte que les mouvements de relevage avec les moyens de relevage (3) des deux côtés du tambour de galbage (19) peuvent être effectués indépendamment l'un de l'autre.

6. Procédé selon l'une des revendications précédentes,
**caractérisé en ce que**
à l'étape f) les mouvements de relevage avec les moyens de relevage (3) des deux côtés du tambour de galbage (19) sont accouplés entre eux.

7. Procédé selon l'une des revendications précédentes,
**caractérisé en ce que**
à l'étape c), les flancs (5, 11) sont préalablement enroulés dans la station de flancs sur des tambours de flancs séparés,
la carcasse de pneumatique (10) étant ensuite positionnée coaxialement aux tambours de flancs, puis les flancs (5, 11) étant reliés aux bourrelets de pneumatique (15) de la carcasse de pneumatique (10) par une expansion des tambours de flancs,
l'unité de transfert de carcasse (12) déplaçant ensuite la carcasse de pneumatique (10) avec les flancs fixés (5, 11) vers le poste de galbage (1).

8. Procédé selon l'une des revendications précédentes,
**caractérisé en ce que**
à l'étape c), la carcasse de pneumatique (9) est déplacée par retournement des plis (6) directement vers le poste de galbage (1) et est positionnée de manière coaxiale dans la région des segments de serrage de noyau (2) du tambour de galbage (19),
les flancs ayant été préalablement enroulés et pré-positionnés dans la région des segments de serrage de noyau du tambour de galbage.

9. Procédé selon l'une des revendications précédentes,
**caractérisé en ce que** les segments de serrage de noyau (2) sont conçus sous la forme de segments plats, de segments pourvus d'une cavité ou de segments pourvus d'une rainure.

10. Procédé selon l'une des revendications précédentes,
**caractérisé en ce que**
les flancs (5, 11) sont un composant combiné comportant des composants de pneumatique supplémentaires.
